# EUROPÄISCHE PATENTSCHRIFT

(11) **EP 2 337 974 B1**
(45) Veröffentlichungstag und Bekanntmachung des Hinweises auf die Patenterteilung: **17.04.2013**
(21) Anmeldenummer: 09783533.4
(22) Anmeldetag: 29.09.2009
(51) Int. Cl.: F16H 61/14

(54) **VERFAHREN ZUM BETÄTIGEN EINER KUPPLUNG EINES HYDRODYNAMISCHEN DREHMOMENTWANDLERS**
METHOD FOR ACTUATING A CLUTCH OF A HYDRODYNAMIC TORQUE CONVERTER
PROCÉDÉ D'ACTIONNEMENT D'UN EMBRAYAGE D'UN CONVERTISSEUR DE COUPLE HYDRODYNAMIQUE

(30) Priorität: 23.10.2008 DE 102008043104
(43) Veröffentlichungstag der Anmeldung: 29.06.2011
(73) Patentinhaber: ZF Friedrichshafen AG, 88038 Friedrichshafen (DE)
(72) Erfinder: HÖFLER, Hans, 88090 Immenstaad (DE); KURZ, Thomas, 88085 Langenargen (DE)
(86) Internationale Anmeldenummer: PCT/EP2009/062594
(87) Internationale Veröffentlichungsnummer: WO 2010/046205

(56) Entgegenhaltungen:
- EP-A- 1 288 533
- DE-A1- 2 944 410
- DE-A1- 19 717 355

## Beschreibung

Die Erfindung bezieht sich auf ein Verfahren zum Betätigen einer Kupplung eines hydrodynamischen Drehmomentwandlers nach der im Oberbegriff von Anspruch 1 näher definierten Art.

Gattungsgemäße Kupplungen in Drehmomentwandlern werden im Schließsinne betätigt, um den Antrieb mit dem Abtrieb des Drehmomentwandlers zu verbinden, wodurch ein direkter Durchtrieb vom Antrieb zum Abtrieb stattfindet, was eine Wirkungsgradverbesserung zur Folge hat. Häufig werden diese Kupplungen im Schließsinne betätigt, wenn das Turbinendrehmoment zum Pumpendrehmoment bei geschlossener oder offener Kupplung gleich groß ist. Diese Schaltpunkte werden durch die Drehzahldifferenz zwischen dem Pumpenrad und dem Turbinenrad des hydrodynamischen Drehmomentwandlers ermittelt. EP1 288 533A offenbart eine Arbeitsmaschine mit Drehmomentwandler.

Die DE 29 44 410 C2 offenbart eine Überbrückungskupplung eines hydrodynamischen Drehmomentwandlers, welche so lange im Schließsinne betätigt bleibt, bis eine Betriebsbremse betätigt wird, um ein Abwürgen des Motors infolge Blockieren der Räder sicher zu vermeiden.

Die DE 197 17 355 A1 offenbart eine Steuerung für einen Personenkraftwagen, mittels welcher eine Überbrückungskupplung umsteuerbar ist.

Der vorliegenden Erfindung liegt die Aufgabe zugrunde, ein Verfahren zum Betätigen einer Kupplung eines hydrodynamischen Drehmomentwandlers zu schaffen, welches die Betriebssicherheit des Fahrzeugs weiter verbessert.

Die Aufgabe wird mit einem, auch die kennzeichnenden Merkmale des Hauptanspruchs aufweisenden, gattungsgemäßen Verfahren zum Betreiben einer Kopplung eines hydrodynamischen Drehmomentwandlers gelöst.

Erfindungsgemäß wird die Kupplung des hydrodynamischen Drehmomentwandlers mittels Fahrzustandsgrößen im Schließsinne betätigt und bleibt auch dann im Schließsinne betätigt, wenn eine Betriebsbremse betätigt wird, und eine Einrichtung zum Erkennen des Fahrzustandes erkennt, dass das Fahrzeug sich in einem Bergabfahrzustand befindet. Indem die Kupplung auch beim Bergabfahren des Fahrzeugs geschlossen bleibt, kann zum Verzögern des Fahrzeugs über die Betriebsbremse das Fahrzeug auch über die Motorbremse verzögert werden. Befindet sich das Fahrzeug hingegen nicht in einem Bergabfahrzustand, so wird die im Schließsinne betätigte Kupplung im Öffnungssinne betätigt, wenn die Betriebsbremse betätigt wird. Dadurch ist es möglich, beispielsweise bei einer Arbeitsmaschine, wie einem Radlader, die Drehzahl des Antriebsmotors stark zu erhöhen und gleichzeitig das Fahrzeug zu verzögern, um eine ausreichende Drehzahl an der Hydraulikpumpe für die Arbeitshydraulik zu erhalten, um beispielsweise eine Schaufel des Radladers zügig anzuheben.

In einer weiteren Ausgestaltung der Erfindung wird die Kupplung erneut im Schließsinne betätigt, wenn die Betriebsbremse nicht mehr betätigt ist und entsprechende Schaltpunkte, beispielsweise aus der Turbinen- und Pumpendrehzahl, erreicht sind. Die Kupplung wird mittels einer Getriebesteuereinheit angesteuert, welche Signale, beispielsweise Drehzahlsignale vom Turbinenrad und dem Pumpenrad des hydrodynamischen Drehmomentwandlers, oder Kennsignale vom Antriebsmotor, beispielsweise vom Drehmoment des Antriebsmotors, erhält. Die Getriebesteuereinheit wertet diese Signale aus und steuert entsprechend den Betriebsparametern des Fahrzeugs die Kupplung an.

In einer weiteren Ausgestaltungsform der Erfindung wird die Kupplung trotz betätigter Betriebsbremse und einem Fahrzustand "Bergab" im Öffnungssinne betätigt, wenn das Fahrzeug unterhalb eines definierten Geschwindigkeitsniveaus ist.

Ein Bergabfahrzustand kann beispielsweise mittels des detektierten Drehmoments des Antriebsmotors oder eines Niveauschalters ermittelt werden.

Die Betätigung der Betriebsbremse kann beispielsweise über die Bremspedalstellung oder den Bremsdruck detektiert werden.

Indem die Kupplung im Schließsinne betätigbar ist, kann der Wirkungsgrad verbessert werden. Durch Betätigen der Kupplung im Öffnungssinne, wenn das Bremspedal betätigt wird, ist es möglich, die Drehzahl des Antriebsmotors und somit der Arbeitspumpe der Arbeitsmaschine auch dann zu erhöhen, wenn die Kriterien zum Schließe der Kupplung erfüllt sind. Indem die Kopplung auch bei betätigter Betriebsbremse bei einer Bergabfahrt im Schließsinne betätigt bleibt, besteht die Möglichkeit, die Betriebsbremse zu entlasten, indem das Fahrzeug mittels der Motorbremse mitabgebremst wird.

## Patentansprüche

1. Verfahren zum Betätigen einer Kupplung eines hydrodynamischen Drehmomentwandlers in einer selbstfahrenden Arbeitsmaschine wie einem Radlader, wobei die Kupplung beim Betätigen im Schließsinne geschlossen wird und dadurch den Antrieb des hydrodynamischen Drehmomentwandlers mit dem Abtrieb des hydrodynamischen Drehmomentwandlers verbindet, und die Kupplung beim Betätigen einer Betriebsbremse im Öffnungssinne betätigt wird, **dadurch gekennzeichnet, dass** die Kupplung bei betätigter Betriebsbremse im Schließsinne betätigt und somit geschlossen bleibt, wenn eine Einrichtung zum Erkennen des Fahrzustandes des Fahrzeugs erkennt, dass das Fahrzeug sich in einem Bergabfahrzustand befindet

2. Verfahren zum Betätigen einer Kupplung nach Anspruch 1, **dadurch gekennzeichnet, dass** bei betätigter Betriebsbremse und erkanntem Bergabfahrzustand und unterhalb eines definierten Geschwindigkeitsniveaus des Fahrzeug die Kupplung im Öffnungsinne betätigt wird.

3. Verfahren zum Betätigen einer Kupplung nach Anspruch 1, **dadurch gekennzeichnet, dass** bei betätigter Betriebsbremse und erkanntem Bergabfahrzustand und oberhalb eines definierten Drehmoments an der Antriebswelle die Kupplung im Öffnungssinne betätigt wird.

4. Verfahren zum Betätigen einer Kupplung nach Anspruch 1, **dadurch gekennzeichnet, dass** ein Bergabfahrzustand mit Hilfe des Drehmoments eines Antriebsmotors ermittelt wird.

5. Verfahren zum Betätigen einer Kupplung nach Anspruch 1, **dadurch gekennzeichnet, dass** die Betätigung der Betriebsbremse über die Bremspedalstellung oder den Bremsdruck ermittelt wird.

6. Verfahren zum Betätigen einer Kupplung nach Anspruch 1, **dadurch gekennzeichnet, dass** nach Betätigen der Kupplung im Öffnungssinne diese im Schließsinne betätigt wird, wenn die Betriebsbremse nicht betätigt ist und die Drehzahl des Antriebs im Bereich der Drehzahl des Abtriebs liegt.

7. Verfahren zum Betätigen einer Kupplung nach Anspruch 1, **dadurch gekennzeichnet, dass** eine Getriebeelektronik die Drehzahl des Antriebs, die Drehzahl des Abtriebs, die Bremspedalstellung oder den Bremsdruck und das Drehmoment eines Antriebsmotors ermittelt und die Kupplung ansteuert.

8. Verfahren zum Betätigen einer Kupplung nach Anspruch 1, **dadurch gekennzeichnet, dass** das Drehmoment eines Antriebsmotors mittels CAN-Signal an eine Getriebesteuereinheit übermittelt wird, welches diese für die Detektierung des Bergabfahrzustandes verwendet.

## Claims

1. Method for actuating a clutch of a hydrodynamic torque converter in a self-propelled working machine such as a wheeled loader, wherein the clutch, upon actuation in a closing sense, is closed and thereby connects the drive input of the hydrodynamic torque converter to the drive output of the hydrodynamic torque converter, and the clutch is actuated in the opening sense upon actuation of a service brake, **characterized in that**, when the service brake is actuated, the clutch remains actuated in the closing sense and thus closed if a device for identifying the driving state of the vehicle identifies that the vehicle is in a downhill-travel state.

2. Method for actuating a clutch according to Claim 1, **characterized in that**, when the service brake is actuated and a downhill-travel state has been identified and below a defined speed level of the vehicle, the clutch is actuated in the opening sense.

3. Method for actuating a clutch according to Claim 1, **characterized in that**, when the service brake is actuated and a downhill-travel state has been identified and above a defined torque on the driveshaft, the clutch is actuated in the opening sense.

4. Method for actuating a clutch according to Claim 1, **characterized in that** a downhill-travel state is determined by means of the torque of a drive engine.

5. Method for actuating a clutch according to Claim 1, **characterized in that** the actuation of the service brake is determined by means of the brake pedal position or the brake pressure.

6. Method for actuating a clutch according to Claim 1, **characterized in that**, after the actuation of the clutch in the opening sense, it is actuated in the closing sense if the service brake is not actuated and the rotational speed of the drive input lies in the range of the rotational speed of the drive output.

7. Method for actuating a clutch according to Claim 1, **characterized in that** transmission electronics determine the rotational speed of the drive input, the rotational speed of the drive output, the brake pedal position or the brake pressure and the torque of a drive engine and activate the clutch.

8. Method for actuating a clutch according to Claim 1, **characterized in that** the torque of a drive engine is transmitted by means of CAN signal to a transmission control unit which uses said signal for the detection of the downhill-travel state.

## Revendications

1. Procédé pour l'actionnement d'un embrayage d'un convertisseur de couple hydrodynamique dans une machine de travail automotrice telle qu'un véhicule chargeur, l'embrayage étant fermé lors de l'actionnement dans le sens de la fermeture et de ce fait reliant l'entraînement du convertisseur de couple hydrodynamique à la prise de force du convertisseur de couple hydrodynamique, et l'embrayage étant actionné dans le sens de l'ouverture lors de l'actionnement d'un frein de service, **caractérisé en ce que** l'embrayage est actionné dans le sens de la fermeture lorsque le frein de service est actionné et reste ainsi fermé lorsqu'un dispositif de détection de l'état de conduite du véhicule détecte que le véhicule se trouve dans un état de descente de pente.

2. Procédé pour l'actionnement d'un embrayage selon la revendication 1, **caractérisé en ce que** lorsque le frein de service est actionné et que l'état de descente de pente est détecté, et en dessous d'un niveau de vitesse défini du véhicule, l'embrayage est actionné dans le sens de l'ouverture.

3. Procédé pour l'actionnement d'un embrayage selon la revendication 1, **caractérisé en ce que** lorsque le frein de service est actionné et que l'état de descente de pente est détecté et au-dessus d'un couple défini au niveau de l'arbre d'entraînement, l'embrayage est actionné dans le sens de l'ouverture.

4. Procédé pour l'actionnement d'un embrayage selon la revendication 1, **caractérisé en ce qu'**un état de descente de pente est déterminé à l'aide du couple d'un moteur d'entraînement.

5. Procédé pour l'actionnement d'un embrayage selon la revendication 1, **caractérisé en ce que** l'actionnement du frein de service est déterminé par le biais de la position de la pédale de frein ou de la pression de freinage.

6. Procédé pour l'actionnement d'un embrayage selon la revendication 1, **caractérisé en ce qu'**après l'actionnement de l'embrayage dans le sens de l'ouverture, celui-ci est actionné dans le sens de la fermeture lorsque le frein de service n'est pas actionné et que la vitesse de rotation de l'entraînement se situe dans la plage de la vitesse de rotation de la prise de force.

7. Procédé pour l'actionnement d'un embrayage selon la revendication 1, **caractérisé en ce qu'**une électronique de transmission détermine la vitesse de rotation de l'entraînement, la vitesse de rotation de la prise de force, la position de la pédale de frein, ou la pression de freinage et le couple d'un moteur d'entraînement et commande l'embrayage.

8. Procédé pour l'actionnement d'un embrayage selon la revendication 1, **caractérisé en ce que** le couple d'un moteur d'entraînement est transmis au moyen d'un signal CAN à une unité de commande de transmission qui utilise celui-ci pour la détection de l'état de descente de pente.
